# EUROPEAN PATENT SPECIFICATION

(11) **EP 1 408 782 B1**
(45) Date of publication and mention of the grant of the patent: **07.06.2006**
(21) Application number: 02722675.2
(22) Date of filing: 22.03.2002
(51) Int. Cl.: A41D 31/00, A41D 19/015, A41D 19/04

(54) **MANUFACTURING PROCESS OF CLOTHING PROVIDED WITH PROTECTION ELEMENTS and glove with a protective element**
VERFAHREN ZUR HERSTELLUNG VON KLEIDUNGEN MIT SCHUTZELEMENTEN und Handschuh mit einem Schutzelement
PROCEDE DE FABRICATION DE VETEMENTS MUNIS D'ELEMENTS DE PROTECTION et gant avec un élément de protection

(30) Priority: 23.03.2001 IT RM20010156
(43) Date of publication of application: 21.04.2004
(73) Proprietor: Dainese S.p.A., 36060 Molvena (IT)
(72) Inventor: DAINESE, Lino, I-36060 Molvena VI (IT)
(74) Representative: Leone, Mario
(86) International application number: PCT/IT2002/000187
(87) International publication number: WO 2002/076249

(56) References cited:
- WO-A-01/08516
- DE-A- 4 029 685
- GB-A- 534 846
- US-A- 4 768 234
- US-A- 5 423 087
- US-A- 5 682 613

## Description

The present invention refers to a manufacturing process of clothing provided with protection elements located at predetermined body positions and to a glove comprising such protection elements.

In several sporting and non-sporting activities, the use of clothing provided with protections located at predetermined positions is advisable, in order to protect the user from accidental knocks during the practice thereof.

A typical instance is that of the gloves worn by motorcycle pilots when driving, especially at a professional level.

The gloves used in these cases should have protections, preferentially located onto the back and onto the fingers of the hand. In fact, it is well-known that upon falling the most serious hand traumas occur when the same impacts or scrapes the terrain with its back or fingers.

Usually, in order to protect the hand in the case of the abovedescribed impacts, gloves are provided with rigid or semirigid protection elements located at the back and joints of the finger, whereas the palm is generally protected by padding elements, essentially destined to cushion knocks.

To date, the gloves used for the abovedescribed goal provide protection elements made of paddings and/or rigid plates applied onto the back, the fingers and the palm, fixed by seams to overlapped applications.

However, the presence of such seams constitutes a major drawback, first of all due to the manufacturing complexity entailed thereby.

In fact, alike gloves are made of several leather or fabric portions, sewn thereamong and to the protection elements. Their assembling should necessarily be handicraft, with the further drawback of failing to provide a perfect homogeneity among gloves having the same size.

Moreover, the presence of a high number of seams substantially weakens the very glove structure. In the case of a fall, said seams could easily tear, due, e.g., to a friction or to a getting stuck into the ground thereof, thereby resulting in the displacement and/or the loss of the protection elements which are thus rendered ineffective.

Moreover, the presence of seams increases the drag and therefore the vibration problems possibly affecting the comfort of the glove.

In WO 01/08516, a garment constituted by a single piece composed by a plurality of layers of different material is disclosed, so that to avoid the use of seams and giving the possibility to insert reinforcement elements within the layers. Nevertheless, the manufacturing method disclosed does not allow a correct and accurate positioning of the protection elements within the layers of the garment, especially if the garment must be formed in a particular shape.

US 4,768,234 discloses a method for manufacturing gloves comprising protective elements, wherein the protective elements are mounted to the glove without sewings Nevertheless, such gloves do not comprise a protective element of rigid and/or semirigid material interposed between a first and second fabric layer.

For simplicity's sake, hereinafter the term fabric will be preserved. Of course, this term should be construed as encompassing actual fabrics as well as hides or other synthetic and more specific materials like e.g. Kevlar or Carbon.

Object of the present invention is to solve the abovementioned problems of the known art, providing a manufacturing process of clothing provided with protection elements, characterized in that it comprises the following steps:
- providing a first mold comprising a first plane base element apt to house a first fabric portion, and a first clamping element;
- positioning said first fabric portion on said base element;
- positioning one or more protection elements at predetermined positions, each of said protection elements being made of a rigid and/or semirigid material;
- heating the clamping element to a predetermined temperature;
- clamping the first mold, for a predetermined time interval, with said first clamping element, exerting a pressure so as to fix said protection elements on said fabric portion;
- providing a second mold comprising a second concave base element and a second clamping element having a shape complementary to that of said second base element;
- positioning said fabric portion fixed with said protection elements on said second base element;
- cooling said second mold down to a predetermined temperature;
- clamping the second mold, for a predetermined time interval, with said second clamping element, exerting a pressure, so as to provide a concave shape to said fabric with said protection elements in order to allow said first fabric portion and the protection elements to permanently assume the shape of the second mold;
- providing a third mold comprising a third concave base element and a third clamping element having a shape complementary to that of said third base element;
- positioning said first fabric portion with said thermoformed protection elements on said third base element;
- positioning one or more padding elements on said protection elements;
- positioning and fixing a second fabric on said first fabric portion;
- heating the third clamping element to a predetermined temperature; and
- clamping the third mold, for a predetermined time interval, with said third clamping element

A further object of the present invention is to provide a glove comprising a first fabric portion, a protection element, a padding element and a second fabric portion, characterized in that:
- said protection is fixed to said first fabric portion and thermoformed by heated pressure molding and subsequent cooling, so as to provide a concave shape to said first fabric portion with said protection element;
- said padding element is positioned on said protection element;
- said first fabric portion is fixed to said second fabric portion; and
- said protection element and said padding element are interposed between said first and second fabric portions.

According to said process there can be manufactured any clothing to be provided with protection elements for the abovedescribed aims, in particular a glove for motorcycling or other sports.

For simplicity's sake, hereinafter reference will still be made to the application of the process in the case of gloves, in particular for motorcycling. Of course, it is understood that the same process may be used for manufacturing any other clothing provided with alike protection elements.

A first advantage of the process according to the present invention lies in that the carrying out thereof eliminates the seams required for the fixing of the protection elements.

Specifically, in the case of gloves, those can be dispensed with seams on the glove back, totally eliminating the risk of a breaking thereof in a fall.

Some of the seams present on the palm can be eliminated as well, since with the same process also the paddings and the stiffeners provided can advantageously be applied.

A second advantage lies in that the back of the glove is thus integrally manufactured, it being sturdy and hardly prone to breaking.

A third advantage ensues from the greater ease of manufacturing, due to the decrease in the number of fabric portions to be sewn thereamong, and from the fact that the manufacturing process can be totally or partially automated and carried out with suitable apparatuses, with the entailed reduction of the packaging times and hence also with an advantageous cost-effectiveness.

A fourth advantage ensues from the more elevated streamline of the clothing manufactured with the process according to the present invention. The improved streamline gives to the clothing an improved comfort of use, due to the absence of vibrations.

Further advantages, features and modes of employ of the present invention will be made apparent in the following detailed description of some preferred embodiments thereof, given as a non-limiting example, making reference to the figures of the accompanying drawings, wherein:
figure 1 is a perspective view of a glove manufactured according to techniques known to the art;
figures 2 to 7 are sectional views depicting the process according to the present invention;
figure 8 is a perspective view of a first embodiment of a glove according to the present invention;
figure 9 is a perspective view of a second embodiment of a glove according to the present invention;
figure 10A is a sectional view of the glove of figure 9 with a hand in an extended position;
figure 10B is a detail of figure 10A;
figure 11A is a sectional view of the glove of figure 9 with a hand in a drawn up position; and
figure 11B is a detail of figure 11A.

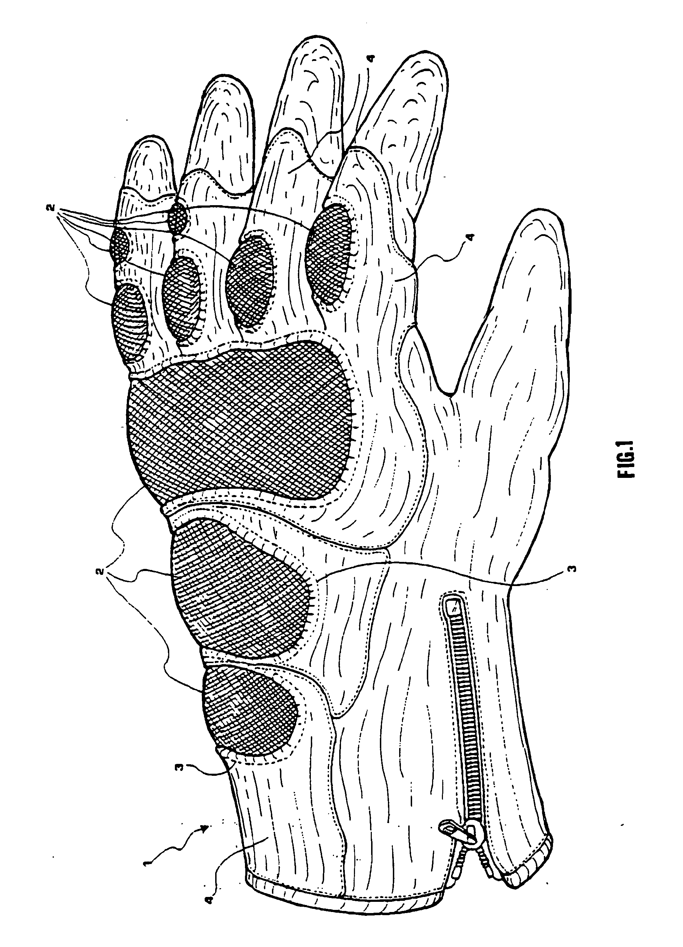

With initial reference to figure 1, it shows a glove 1 manufactured according to techniques known to the art, in which the protection elements 2 are applied onto the glove back and fixed with seams 3 to fabric portions 4 overlapped thereto.

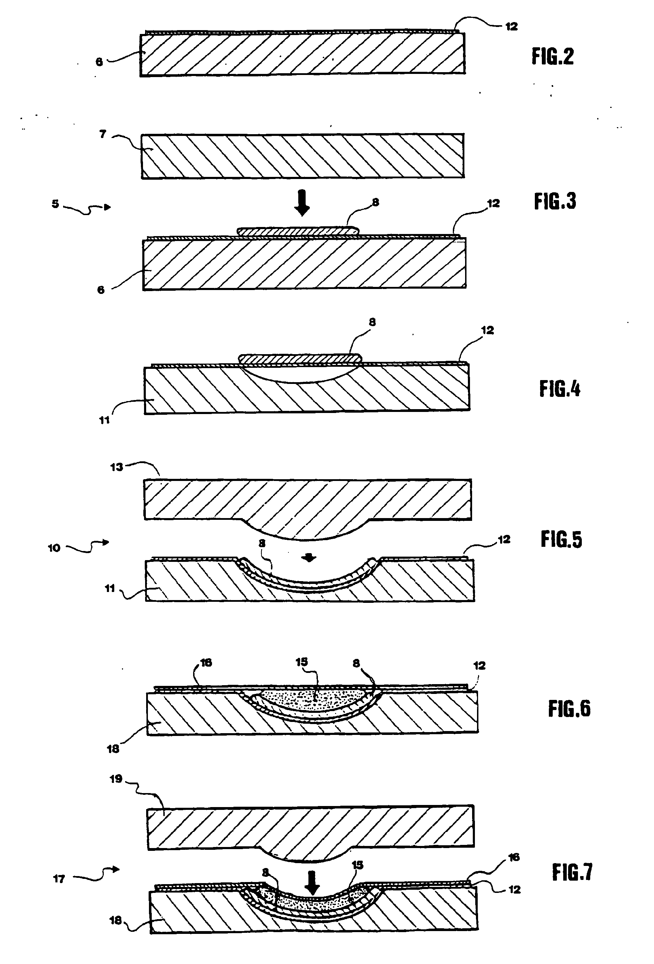

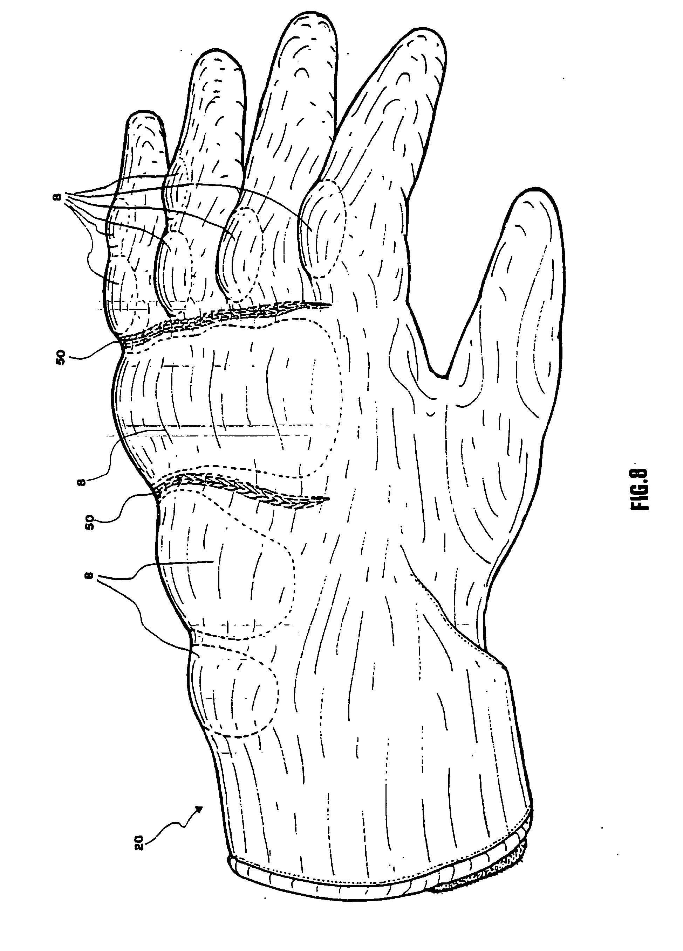

- Next, figures 2 to 7 illustrate the process according to the present invention, adopted for manufacturing a glove provided with protection elements onto the back thereof.

The process foresees no sewing of overlapped fabric portions, and it is based on a thermoforming and glueing technique of one or more protection elements 8 with the use of molds 5, 10, 17 of different shapes so that said elements be incorporated into the glove structure.

Figures 2 and 3 are sectional views of a mold 5, comprising a first plane base element 6, wherein a fabric portion 12 will be located.

Then, above said fabric portion 12 one or more protection elements 8 made of a rigid or semirigid material are located. A first clamping element 7 completes the mold 5.

Then, the clamping element 7 is heated to a predetermined temperature, preferably be of about 120 °C, and the mold 5 is clamped, exerting a certain pressure for a predetermined time interval.

Optionally, according to the specific material used, different temperatures could be selected.

Thus, a thermoforming of the protection elements 8 on said fabric portion 12 is attained.

A further step of the process provides that, upon opening the mold 5, the fabric portion 12 with the protection elements 8 be located on a second mold 10 comprising a second concave base element 11 and a second clamping element 13 of a shape complementary to that of the latter. In particular, the base element 11 will have concave regions, and the clamping element 13 corresponding convex regions.

Preferably, these concave regions will be manufactured at the locations of the protection elements 8, e.g. at the back of the hand and/or of the finger joints, and will be such as to substantially have a shape anatomically adapting to that of the gloved hand.

A first fabric portion 12 is positioned onto the base element 6 of the mold, and optionally it is fixed sideways by punching, etc.

Then, a protection element 8 is positioned at each of the regions provided therefor. These elements are preferably manufactured in a rigid or semirigid material, e.g. Kevlar-Carbon or other thermoformable mesh net materials, in order to provide an elevated sturdiness, and hence an elevated safety in case of crash. The mold is clamped by means of the clamping element 7 which is preheated to a predetermined temperature.

A subsequent step of the process foresees the positioning of the fabric provided with the fixed protection elements onto the base element 11, and then the clamping of the mold with a clamping element 13 having a shape complementary with respect to the base element 11, exerting a pressure.

The mold 10 is a cooling mold which, upon having been clamped so as to let said fabric portion 12 with said protection elements 8 assume a concave shape, is cooled, e.g. with a closed-circuit cooling system.

These conditions of pressure and temperature are held for a predetermined time interval, e.g. for about 3 minutes, in order to allow the fabric 12 and the constituent material of the protection element 8 to permanently assume the anatomical shape of the mold. Advantageously, this time interval could be varied according to the materials employed.

In a third step of the process, it is used a third mold 17, alike to the second one, comprising a third base element 18 having concave regions, and a third clamping element 19 having corresponding convex regions.

At the protection elements 8, there is located a padding element 15, preferably manufactured in a soft material, like, e.g. foam of the low-memory type. Advantageously, this element 15, inserted essentially to prevent the hand skin from contacting the rigid surface of the protection elements 8, could be fixed with specific bonding agents to be selected according to the materials employed.

A further step of the process provides the overlapping and the fixing of a second fabric portion 16 to the first fabric portion 12. This second fabric portion 16 forms the lining of the glove and it is fixed with a glueing step, preferably carried out with hot-bonding agents having one or more components.

Then, the clamping element 19 is brought to a predetermined temperature, preferably of about 120°C, though optionally different temperatures could be selected according to the materials employed, and it is clamped with the base element 18.

Hereto, the process was described for the manufacturing of the back of a glove, substantially piece-formed, incorporating thermoformed protection elements and seamless.

The back could then be dimensioned, with a dinking die or the like, to the desirable size, and assembled to the other individually prepared glove portions.

Of course, the same process could be used for manufacturing the palm-related glove portion, by inserting further protection elements or simply by thermoforming padding elements therein.

Next, figure 8 is a perspective view of a first embodiment of a glove 20 manufactured with the abovedescribed process according to the present invention.

In particular, protection elements 8 were inserted at the finger back and joints.

Advantageously, the glove 20 comprises one or more stretch regions 50, located at some of the protection elements 8. Thus, the flexibility of the former is improved, allowing an easy flexing of the hand hampered no more by the rigidity of the protection elements 8.

Preferably, such regions 50 are manufactured obtaining a cut onto the outer fabric of the glove and fixing a stretch fabric portion inside of the cut.

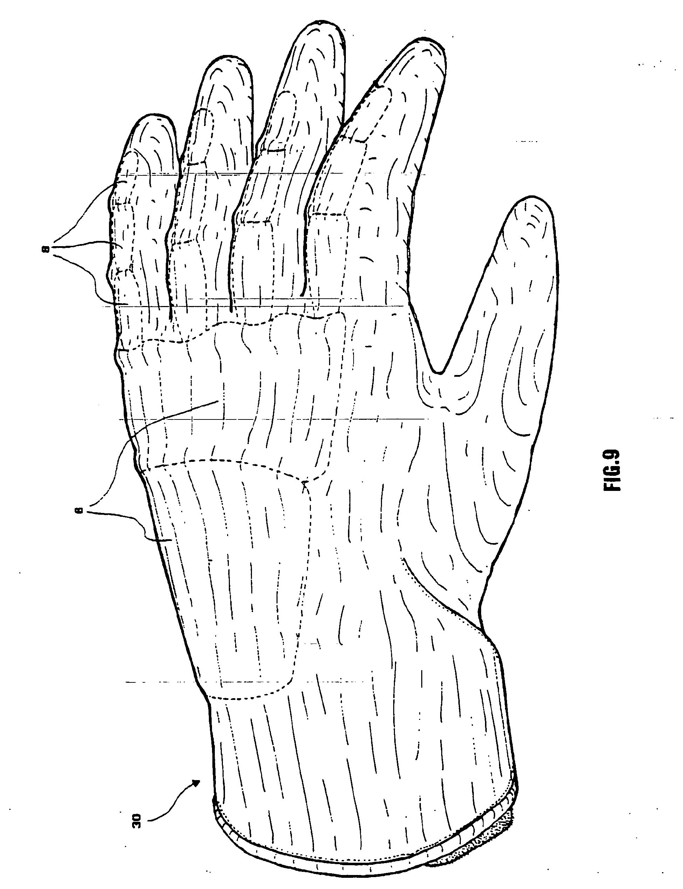

Figure 9 is a perspective view of a second embodiment of a glove 30 manufactured with the abovedescribed process according to the present invention.

In this case, inside of the glove back and fingers a plurality of protection elements 8 was inserted, thereby forming an uninterrupted reinforcing plate, apt to protect the user's hand in the case of fall, and specifically to avoid unnatural bendings of the fingers.

Next, figure 10A is a sectional view of the glove of figure 9 with a hand in an extended position.

The elements 8 are connected thereamong and are shaped so as to form, with the hand in an extended position, a single rigid and uninterrupted reinforcing structure, onto the back as well as onto the fingers of the hand.

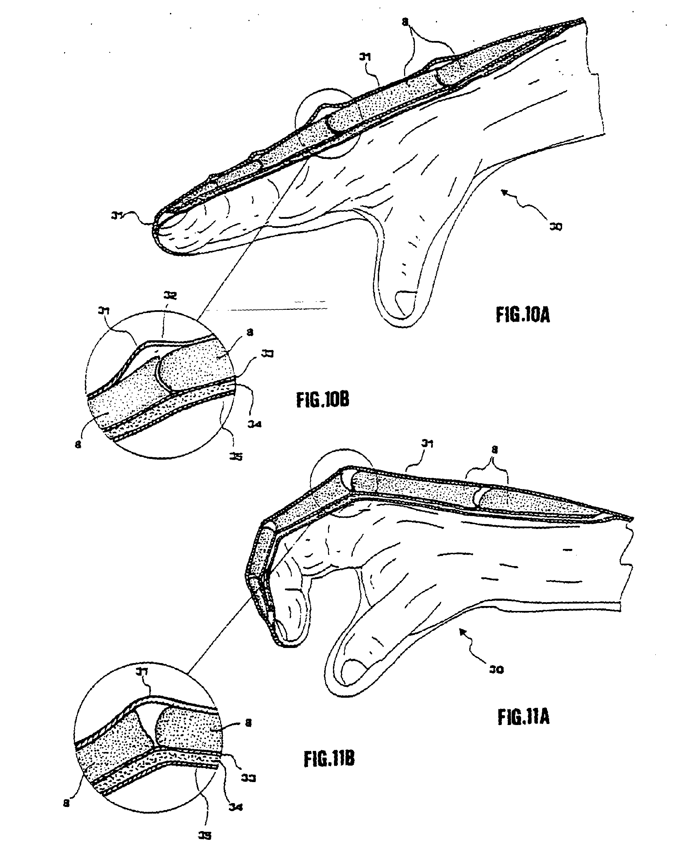

The detail of figure 10B depicts more clearly the manufacturing of the glove at the junctions between the various protection elements 8.

The outer fabric 31 of the glove is fixed to the protection elements 8 over the entire surface thereof, except at the region 32 near to the junction. In that region the fabric is not fixed to the elements 8, and it is located so as to allow the easy bending of the latter.

A second fabric layer 33 is glued to the elements 8 onto the inner side of the glove. This fabric layer 33, near to the junction, also serves as hinge along which the joint can move.

Then, a padding element 34 is interposed between the layer 33 and the inner lining 35 of the glove.

The padding element 34 is inserted in order to prevent a direct contact between the hand and the rigid surface of the protection elements.

Figures 11A and 11B show a second sectional view of the glove 30 of figure 9, with the hand in a drawn up position.

The present invention has hereto been described according to preferred embodiments thereof, given by way of example and without limitative purpose.

It is understood that other embodiments could be provided, all to be construed as falling within the protective scope thereof, as defined by the annexed claims.

## Claims

1. A manufacturing process of clothing provided with protection elements, **characterized in that** it comprises the following steps:
- providing a first mold (5) comprising a first plane base element (6) apt to house a first fabric portion 12), and a first clamping element (7);
- positioning said first fabric portion (12) on said base element (6);
- positioning one or more protection elements (8) at predetermined positions, each of said protection elements (8) being made of a rigid and/or semirigid material;
- heating the first clamping element (7) to a predetermined temperature;
- clamping the first mold (5), for a predetermined time interval, with said first clamping element (7), exerting a pressure so as to fix said protection elements (8) on said fabric portion (12);
- providing a second mold (10) comprising a second concave base element (11) and a second clamping element (13) having a shape complementary to that of said second base element (11);
- positioning said fabric portion (12) fixed with said protection elements (8) on said second base element (11);
- cooling said second mold (10) down to a predetermined temperature;
- clamping the second mold (10), for a predetermined time interval, with said second clamping element (13), exerting a pressure, so as to provide a concave shape to said fabric (12) with said protection elements (8) in order to allow said first fabric portion (12) and the protection elements (8) to permanently assume the shape of the second mold (10);
- providing a third mold (17) comprising a third concave base element (18) and a third clamping element (19) having a shape complementary to that of said third base element (18);
- positioning said first fabric portion (12) with said thermoformed protection elements (8) on said third base element (18);
- positioning one or more padding elements (15) on said protection elements (8);
- positioning and fixing a second fabric (16) on said first fabric portion (12);
- heating the third clamping element (19) to a predetermined temperature; and
- clamping the third mold (17), for a predetermined time interval, with said third clamping element (19),

2. The process according to claim 1, wherein said predetermined heating temperature is of about 120°C.

3. The process according to claim 1, wherein said predetermined temperature of the molds (5, 10, 17) is selected according to the materials employed.

4. The process according to any one of the preceding claims, wherein said predetermined time interval is of about 3 minutes.

5. The process according to any one of the claims 1 to 3, wherein said predetermined time interval is selected according to the materials employed.

6. The process according to any one of the preceding claims, wherein said step of cooling the mold (10) is carried out with a closed-circuit cooling system.

7. The process according to any one of the preceding claims, wherein said step of fixing a second fabric portion (16) to said first portion (12), is carried out with a gluing step with one or more components.

8. A glove (20; 30) comprising
- a first fabric portion (12), a protection element (8) made of a rigid and/or semirigid material, a padding element (15) and a second fabric portion (16);
**characterized in that**:
- said protection element (8) is fixed to said first fabric portion (12) and thermoformed by heated pressure molding and subsequent cooling, so as to provide a concave shape to said first fabric portion (12) with said protection element (8);
- said padding element (15) is positioned on said protection element (8);
- said first fabric portion (12) is fixed to said second fabric portion (16); and
- said protection element (8) and said padding element (15) are interposed between said first (12) and second (16) fabric portions.

9. The glove according to claim 8, comprising more than one of said protection elements (8) and padding elements (15).

10. The glove according to claim 9, wherein said more than one protection elements (8) are therebetween connected so as to form a single rigid reinforcing structure onto the back of the glove.

11. The glove according to any of claims from 8 to 10, further comprising one or more stretch region (50), located at said protection element (8).

## Patentansprüche

1. Herstellverfahren für Kleidung, die mit Schutzelementen versehen ist, **dadurch gekennzeichnet, dass** das Verfahren die folgenden Schritte umfasst:
Bereitstellen eines ersten Formkörpers (5), der ein ebenes Grundelement (6) umfasst, das geeignet ist, um einen ersten Gewebeteil (12) und ein erstes Presselement (7) aufzunehmen,
Positionieren des ersten Gewebeteils (12) auf dem Grundelement (6),
Positionieren eines Schutzelementes (8) oder mehrerer Schutzelemente (8) auf vorgegebenen Positionen, wobei jedes der Schutzelemente (8) aus einem starren und/oder einem halbstarren Material gefertigt ist,
Erwärmen des ersten Presselementes (7) auf eine vorgegebene Temperatur,
Pressen des ersten Formkörpers (5) für ein vorgegebenes Zeitintervall, wobei das erste Presselement (7) einen Druck ausübt, um so die Schutzelemente (8) auf dem Gewebeteil (12) zu befestigen,
Bereitstellen eines zweiten Formkörpers (10), der ein zweites konkaves Grundelement (11) und ein zweites Presselement (13), das eine zu der des zweiten Grundelementes (11) komplementäre Form aufweist, umfasst,
Positionieren des Gewebeteils (12) mit den befestigten Schutzelementen (8) auf dem zweiten Grundelement (11),
Abkühlen des zweiten Formkörpers (10) auf eine vorgegebene Temperatur,
Pressen des zweiten Formkörpers (10) für ein vorgegebenes Zeitintervall, wobei das Presselement (13) einen Druck ausübt, um so dem Gewebe (12) mit den Schutzelementen (8) eine konkave Form zu geben, um dem ersten Gewebeteil (12) und den Schutzelementen (8) zu ermöglichen, dauerhaft die Form des zweiten Formkörpers (10) anzunehmen,
Bereitstellen eines dritten Formkörpers (17), der ein drittes konkaves Grundelement (18) und ein drittes Presselement (19), das eine zu der des dritten Grundelementes (18) komplementäre Form aufweist, umfasst,
Positionieren des ersten Gewebeteils (12) mit den thermogeformten Schutzelementen (8) auf dem dritten Grundelement (18),
Positionieren eines Polsterelementes (15) oder mehrerer Polsterelemente (15) auf den Schutzelementen (8),
Positionieren und Befestigen eines zweiten Gewebes (16) auf dem ersten Gewebeteil (12),
Erwärmen des dritten Presselementes (19) auf eine vorgegebene Temperatur und
Pressen des dritten Formkörpers (17) für ein vorgegebenes Zeitintervall mit dem dritten Presselement (19).

2. Verfahren nach Anspruch 1, wobei die vorgegebene Erwärmungstemperatur ungefähr 120 °C ist.

3. Verfahren nach Anspruch 1, wobei die vorgegebene Temperatur der Formkörper (5, 10, 17) den verwendeten Materialien entsprechend gewählt wird.

4. Verfahren nach einem der vorhergehenden Ansprüche, wobei das vorgegebene Zeitintervall ungefähr drei Minuten ist.

5. Verfahren nach einem der Ansprüche 1 bis 3, wobei das vorgegebene Zeitintervall den verwendeten Materialien entsprechend gewählt wird.

6. Verfahren nach einem der vorhergehenden Ansprüche, wobei der Schritt des Abkühlens des Formkörpers (10) mit einem Kühlsystem mit geschlossenem Kreislauf ausgeführt wird.

7. Verfahren nach einem der vorhergehenden Ansprüche, wobei der Schritt des Befestigens eines zweiten Gewebeteils (16) auf dem ersten Teil (12) in einem Klebeschritt mit einer Komponente oder mit mehreren Komponenten ausgeführt wird.

8. Handschuh (20, 30), umfassend
einen ersten Gewebeteil (12), ein Schutzelement (8), das aus einem starren und/oder einem halbstarren Material gefertigt ist, ein Polsterelement (15) und einen zweiten Gewebeteil (16),
**dadurch gekennzeichnet, dass**
das Schutzelement (8) an dem ersten Gewebeteil (12) befestigt wird und diese durch Warm-Formpressen und anschließende Abkühlung thermogeformt werden, um so dem ersten Gewebeteil (12) mit dem Schutzelement (8) eine konkave Form zu geben,
das Polsterelement (15) auf dem Schutzelement (8) positioniert wird,
der erste Gewebeteil (12) an dem zweiten Gewebeteil (16) befestigt wird und
das Schutzelement (8) und das Polsterelement (15) zwischen den ersten Gewebeteil (12) und den zweiten Gewebeteil (16) eingefügt sind.

9. Handschuh nach Anspruch 8, mehr als eines der Schutzelemente (8) und der Polsterelemente (15) umfassend.

10. Handschuh nach Anspruch 9, wobei mehr als ein Schutzelement untereinander verbunden sind, um so auf der Rückseite des Handschuhs eine einzelne starre Verstärkungsstruktur auszubilden.

11. Handschuh nach einem der Ansprüche 8 bis 10, des Weiteren einen Streckbereich (50) oder mehrere Streckbereiche (50) umfassend, der bzw. die auf dem Schutzelement (8) angeordnet ist bzw. sind.

## Revendications

1. Procédé de fabrication de vêtement muni d'éléments de protection, **caractérisé en ce qu'**il comporte les étapes consistant à :
- fournir un premier moule (5) comportant un premier élément de base plan (6) apte à recevoir une première partie de tissu (12), et un premier élément de serrage (7),
- positionner ladite première partie de tissu (12) sur ledit élément de base (6),
- positionner un ou plusieurs éléments de protection (8) dans des positions prédéterminées, chacun desdits éléments de protection (8) étant fabriqué à partir d'un matériau rigide et/ou semi-rigide,
- chauffer le premier élément de serrage (7) à une température prédéterminée,
- serrer le premier moule (5), pendant un intervalle de temps prédéterminé, à l'aide dudit premier élément de serrage (7), en exerçant une pression afin de fixer lesdits éléments de protection (8) sur ladite partie de tissu (12),
- fournir un deuxième moule (10) comportant un deuxième élément de base concave (11) et un deuxième élément de serrage (13) ayant une forme complémentaire à celle dudit deuxième élément de base (11),
- positionner ladite partie de tissu (12), sur laquelle sont fixés lesdits éléments de protection (8), sur ledit deuxième élément de base (11),
- refroidir ledit deuxième moule (10) jusqu'à une température prédéterminée,
- serrer le deuxième moule (10), pendant un intervalle de temps prédéterminé, à l'aide dudit deuxième élément de serrage (13), en exerçant une pression, afin de donner une forme concave audit tissu (12) muni desdits éléments de protection (8) pour permettre à ladite première partie de tissu (12) et aux éléments de protection (8) de prendre de manière permanente la forme du deuxième moule (10),
- fournir un troisième moule (17) comportant un troisième élément de base concave (18) et un troisième élément de serrage (19) ayant une forme complémentaire à celle dudit troisième élément de base (18),
- positionner ladite première partie de tissu (12) munie desdits éléments de protection thermoformés (8) sur ledit troisième élément de base (18),
- positionner un ou plusieurs éléments de rembourrage (15) sur lesdits éléments de protection (8),
- positionner et fixer un deuxième tissu (16) sur ladite première partie de tissu (12),
- chauffer le troisième élément de serrage (19) à une température prédéterminée, et
- serrer le troisième moule (17), pendant un intervalle de temps prédéterminé, à l'aide dudit troisième élément de serrage (19).

2. Procédé selon la revendication 1, dans lequel ladite température de chauffage prédéterminée est d'environ 120°C.

3. Procédé selon la revendication 1, dans lequel ladite température prédéterminée des moules (5, 10, 17) est sélectionnée selon les matériaux utilisés.

4. Procédé selon l'une quelconque des revendications précédentes, dans lequel ledit intervalle de temps prédéterminé est d'environ 3 minutes.

5. Procédé selon l'une quelconque des revendications 1 à 3, dans lequel ledit intervalle de temps prédéterminé est sélectionné selon les matériaux utilisés.

6. Procédé selon l'une quelconque des revendications précédentes, dans lequel ladite étape consistant à refroidir le moule (10) est effectuée à l'aide d'un système de refroidissement à circuit fermé.

7. Procédé selon l'une quelconque des revendications précédentes, dans lequel ladite étape consistant à fixer une seconde partie de tissu (16) sur ladite première partie (12) est effectuée à l'aide d'une étape de collage avec un ou plusieurs composants.

8. Gant (20 ; 30) comportant une première partie de tissu (12), un élément de protection (8) fabriqué en un matériau rigide et/ou semi-rigide, un élément de rembourrage (15) et une deuxième partie de tissu (16),
**caractérisé en ce que** :
- ledit élément de protection (8) est fixé sur ladite première partie de tissu (12) et thermoformé par moulage sous pression à chaud et refroidissement consécutif, afin de donner une forme concave à ladite première partie de tissu (12) munie dudit élément de protection (8),
- ledit élément de rembourrage (15) est positionné sur ledit élément de protection (8),
- ladite première partie de tissu (12) est fixée sur ladite seconde partie de tissu (16), et
- ledit élément de protection (8) et ledit élément de rembourrage (15) sont interposés entre lesdites première (12) et deuxième (16) parties de tissu.

9. Gant selon la revendication 8, comportant plus d'un desdits éléments de protection (8) et desdits éléments de rembourrage (15).

10. Gant selon la revendication 9, dans lequel lesdits plus de un éléments de protection (8) sont connectés entre eux afin de former une seule structure de renfort rigide unique sur l'arrière du gant.

11. Gant selon l'une quelconque des revendications 8 à 10, comportant en outre une ou plusieurs zones extensibles (50) situées au niveau dudit élément de protection (8).
